(19) Europäisches Patentamt
European Patent Office
Office européen des brevets

(11) Veröffentlichungsnummer: **0 289 787 B1**

(12) **EUROPÄISCHE PATENTSCHRIFT**

(45) Veröffentlichungstag der Patentschrift: **11.11.92**

(51) Int. Cl.⁵: **C08F 220/04**, A01C 1/06, A01N 25/26, //(C08F220/04, 246:00)

(21) Anmeldenummer: **88105372.2**

(22) Anmeldetag: **02.04.88**

# (54) Wasserlösliche Copolymerisate, Verfahren zu ihrer Herstellung und ihre Verwendung.

(30) Priorität: **11.04.87 DE 3712326**
**04.03.88 DE 3807085**

(43) Veröffentlichungstag der Anmeldung:
**09.11.88 Patentblatt 88/45**

(45) Bekanntmachung des Hinweises auf die Patenterteilung:
**11.11.92 Patentblatt 92/46**

(84) Benannte Vertragsstaaten:
**AT BE CH DE ES FR GB IT LI NL SE**

(56) Entgegenhaltungen:
**EP-A- 0 005 363**
**EP-A- 0 114 478**
**FR-A- 2 595 706**

(73) Patentinhaber: **BASF Aktiengesellschaft**
**Carl-Bosch-Strasse 38**
**W-6700 Ludwigshafen(DE)**

(72) Erfinder: **Seelmann-Eggebert, Hans-Peter, Dr.**
**Friedrichstrasse 8**
**W-6905 Schriesheim(DE)**
Erfinder: **Boeckh, Dieter, Dr.**
**Trifelsring 63**
**W-6703 Limburgerhof(DE)**
Erfinder: **Hartmann, Heinrich, Dr.**
**Weinheimer Strasse 46**
**W-6703 Limburgerhof(DE)**
Erfinder: **Trieselt, Wolfgang, Dr.**
**Alwin-Mittasch-Platz 1**
**W-6700 Ludwigshafen(DE)**

EP 0 289 787 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Aus der WO-Anmeldung 85/01736 ist bekannt, Saatgut mit einer Polymerisatmischung zu beschichten, die hygroskopisch ist. Die Mischung besteht aus feinteiligen vernetzten Polyacrylamiden und feinteiligen vernetzten Polyacrylaten. Diese Mischungen können gegebenenfalls noch Graphit enthalten. Das damit beschichtete Saatgut keimt schneller als unbehandeltes. Nachteilig ist jedoch, daß die hochmolekularen, vernetzten Polymerisate biologisch praktisch nicht abbaubar sind.

Der vorliegenden Erfindung liegt die Aufgabe zugrunde, weitgehend biologisch abbaubare Beschichtungsmittel für Saatgut zur Verfügung zu stellen.

Die Aufgabe wird erfindungsgemäß gelöst mit wasserlöslichen Copolymerisaten auf Basis von monoethylenisch ungesättigten Carbonsäuren mit 3 bis 6 C-Atomen, wenn die Copolymerisate einen K-Wert von 15 bis 120 (bestimmt nach H. Fikentscher am Natriumsalz in wäßriger Lösung bei 25 °C, einem pH-Wert von 7 und einer Polymerkonzentration des Na-Salzes von 1 Gew.%) haben und

a) 99,5 bis 80 Mol% wenigstens einer monoethylenisch ungesättigten $C_3$- bis $C_6$-Monocarbonsäure und

b) 0,5 bis 20 Mol% wenigstens eines mindestens zwei ethylenisch ungesättigte, nicht konjugierte Doppelbindungen aufweisenden Comonomers, das mindestens eine -CO-OX -Gruppe hat, in der X ein Wasserstoff-, ein Alkalimetall- oder Erdalkalimetalläquivalent oder eine Ammoniumgruppe bedeutet,

mit der Maßgabe einpolymerisiert enthalten, daß die Summe der Angaben in Mol% a) und b) immer 100 beträgt.

Die Erfindung umfaßt außerdem wasserlösliche Copolymerisate mit einem K-Wert von 15 bis 120 (bestimmt nach H. Fikentscher am Natriumsalz in wäßriger Lösung bei 25 °C, einem pH-Wert von 7 und einer Polymerkonzentration des Na-Salzes von 1 Gew.%), die

a) mindestens 80 Mol% wenigstens einer monoethylenisch ungesättigten $C_3$- bis $C_6$-Monocarbonsäure,

b) 0,5 bis 20 Mol% wenigstens eines mindestens zwei ethylenisch ungesättigte, nicht konjugierte Doppelbindungen aufweisenden Comonomers, das mindestens eine -CO-OX -Gruppe hat, in der X ein Wasserstoff-, ein Alkalimetall- oder Erdalkalimetalläquivalent oder eine Ammoniumgruppe bedeutet, und

c) 0,05 bis 10 Mol% wenigstens eines von b) verschiedenen Comonomers, das mindestens zwei ethylenisch ungesättigte, nicht konjugierte Doppelbedingungen aufweist,

mit der Maßgabe einpolymerisiert enthalten, daß die Summe der Angaben in Mol% a), b) und c) immer 100 beträgt.

Die wasserlöslichen Copolymerisate werden hergestellt durch Copolymerisieren von Monomergemischen aus

a) 99,5 bis 80 Mol% wenigstens einer monoethylenisch ungesättigten $C_3$- bis $C_6$-Monocarbonsäure und

b) 0,5 bis 20 Mol% wenigstens eines mindestens zwei ethylenisch ungesättigte, nicht konjugierte Doppelbindungen aufweisenden Comonomers, das mindestens eine -CO-OX -Gruppe hat, in der X = H, ein Alkalimetall- oder Erdalkalimetalläquivalent oder eine Ammoniumgruppe bedeutet,

in wäßriger Lösung in Gegenwart von Polymerisationsinitiatoren und gegebenenfalls Reglern, wobei die Summe der Angaben in Mol% a) und b) immer 100 beträgt oder durch Copolymerisieren von Monomergemischen aus

a) mindestens 80 Mol% wenigstens einer monoethylenisch ungesättigten $C_3$- bis $C_6$-Monocarbonsäure,

b) 0,5 bis 20 Mol% wenigstens eines mindestens zwei ethylenisch ungesättigte, nicht konjugierte Doppelbindungen aufweisenden Comonomers, das mindestens eine -CO-OX -Gruppe hat, in der X = H, ein Alkalimetall- oder Erdalkalimetalläquivalent oder eine Ammoniumgruppe bedeutet, und

c) 0,05 bis 10 Mol% wenigstens eines von b) verschiedenen Comonomers, das mindestens zwei ethylenisch ungesättigte, nicht konjugierte Doppelbedingungen aufweist,

in wäßriger Lösung in Gegenwart von Polymerisationsinitiatoren und Reglern, wobei die Summe der Angaben in Mol% a), b) und c) immer 100 beträgt.

Als Komponente a) der wasserlöslichen Copolymerisate kommen monoethylenisch ungesättigte $C_3$- bis $C_6$-Monocarbonsäuren in Betracht. Geeignete Carbonsäuren dieser Art sind beispielsweise Acrylsäure, Methacrylsäure, Ethacrylsäure, Vinylessigsäure, Allylessigsäure und Crotonsäure. Vorzugsweise verwendet man als Monomer der Komponente a) Acrylsäure und/oder Methacrylsäure. Die Monomeren der Komponente a) sind zu 99,5 bis 80, vorzugsweise 97 bis 83 Mol% am Aufbau des Copolymerisats beteiligt.

Wesentlicher Bestandteil der Copolymerisate sind die Monomeren der Komponente b). Hierbei handelt es sich um Comonomere, die mindestens zwei ethylenisch ungesättigte, nicht konjugierte Doppelbindungen und mindestens eine -CO-OH -Gruppe und/oder deren Salz mit einer Alkalimetall-, Ammonium- oder Erdalkalimetallbase aufweisen. Diese Comonomeren bewirken im allgemeinen eine Erhöhung des Molekulargewichts der Copolymerisate und sind zu 0,5 bis 20, vorzugsweise 3 bis 17 Mol% am Aufbau der Copolymerisate beteiligt.

Die Comonomeren b) sind erhältlich durch Umsetzung von

b1) Maleinsäureanhydrid, Itaconsäureanhydrid, Citraconsäureanhydrid oder deren Gemischen mit

b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerinen eines Molekulargewichts bis 2.000, Polyaminen, Polyalkylenpolyaminen, Polyethyleniminen, Aminoalkoholen, Hydroxy-amino- oder -diaminocarbonsäuren, wie insbesondere Lysin und Serin, wasserlöslichen Copolymerisaten aus Ethylenoxid und Kohlendioxid, Polyvinylalkohol eines Molekulargewichts bis 10.000, Allylalkohol, Allylamin, Hydroxyalkylester mit 2 bis 6 C-Atomen in der Hydroxyalkylgruppe von monoethylenisch ungesättigten $C_3$- bis $C_6$-Carbonsäuren oder von gesättigten $C_3$- bis $C_6$-Hydroxycarbonsäuren oder deren Mischungen.

Mehrwertige, 2 bis 6 C-Atome aufweisende Alkohole sind beispielsweise Glykol, Glycerin, Pentaerythrit und Monosaccharide, wie Glucose, Mannose, Galactose, Uronsäuren, wie Galacturonsäure, und Zuckersäuren, wie Schleimsäure oder Galactonsäure.

Unter wasserlöslichen Polyalkylenglykolen sollen die Anlagerungsprodukte von Ethylenoxid, Propylenoxid, n-Butylenoxid und Isobutylenoxid oder deren Gemischen an mehrwertige, 2 bis 6 Kohlenstoffatome aufweisende Alkohole verstanden werden, z.B. die Anlagerungsprodukte von Ethylenoxid an Glykol, Anlagerungsprodukte von Ethylenoxid an Glycerin, Anlagerungsprodukte von Ethylenoxid an Pentaerythrit, Anlagerungsprodukte von Ethylenoxid an Monosaccharide, sowie die Anlagerungsprodukte von Mischungen der genannten Alkylenoxide an mehrwertige Alkohole. Bei diesen Anlagerungsprodukten kann es sich um Blockcopolymerisate von Ethylenoxid und Propylenoxid, von Ethylenoxid und Butylenoxiden oder von Ethylenoxid, Propylenoxid und Butylenoxiden handeln. Außer den Blockcopolymerisaten kommen solche Anlagerungsprodukte in Betracht, die die genannten Alkylenoxide in statistischer Verteilung einpolymerisiert enthalten. Das Molekulargewicht der Polyalkylenglykole beträgt zweckmäßigerweise bis zu 5.000, vorzugsweise bis 2.000. Von den wasserlöslichen Polyalkylenglykolen verwendet man vorzugsweise Diethylenglykol, Triethylenglykol, Tetraethylenglykol und Polyethylenglykol eines Molekulargewichts von bis zu 1.500.

Als Komponente b2) kommen außerdem Polyglycerine eines Molekulargewichts bis 2.000 in Betracht. Vorzugsweise verwendet man von dieser Stoffklasse Diglycerin, Triglycerin und Tetraglycerin.

Geeignete Polyamine sind beispielsweise bevorzugt Diamine, wie Ethylendiamin, 1,3-Propylendiamin, 1,4-Butylendiamin und 1,6-Hexamethylendiamin und Melamin. Als Polyalkylenpolyamine kommen beispielsweise Diethylentriamin, Triethylentetramin, Pentaethylenhexamin, N-(3-Aminopropyl)-1,3-propandiamin und 3-(2-Aminoethyl)-aminopropylamin in Betracht. Besonders geeignete Polyethylenimine haben ein Molekulargewicht bis 5.000.

Als Komponente b2) kommen außerdem Aminoalkohole, wie Ethanolamin, 2-Aminopropanol-1, Neopentanolamin und 1-Methylamino-2-propanol, in Betracht.

Als Komponente b2) eignen sich außerdem wasserlösliche Copolymerisate aus Ethylenoxid und Kohlendioxid, die durch Copolymerisieren von Ethylenoxid und Kohlendioxid erhältlich sind. Außerdem kommen Polyvinylalkohole eines Molekulargewichts bis 10.000, vorzugsweise Polyvinylalkohole mit einem Molekulargewicht bis zu 2.000 in Betracht. Die Polyvinylalkohole, die durch Hydrolyse aus Polyvinylacetat hergestellt werden, können ganz oder teilweise hydrolysiert sein. Weitere geeignete Verbindungen der Komponente b2) sind Lysin, Serin, Allylalkohol, Allylamin und Hydroxyalkylester mit 2 bis 6 C-Atomen in der Hydroxyalkylgruppe von monoethylenisch ungesättigten $C_3$- bis $C_6$-Mono- und Dicarbonsäuren.

Die Hydroxyalkylestergruppen dieser Gruppe von Monomeren leiten sich von mehrwertigen Alkoholen ab, z.B. Glykol, Glycerin, Propandiol-1,2, Propandiol-1,3, Butandiol-1,4, Butandiol-1,3, Butandiol-2,3, Gemische der Butandiole oder Propandiole, Hexandiol-1,6 und Neopentylglykol. Die mehrwertigen Alkohole werden mit monoethylenisch ungesättigten $C_3$- bis $C_6$-Carbonsäuren verestert. Hierbei handelt es sich um diejenigen Carbonsäuren, die oben unter a) und b1) genannt sind. Als Komponente b2) eignen sich somit beispielsweise Hydroxyethylacrylat, Hydroxyethylmethacrylat, Hydroxy-n-propylmethacrylat, Hydroxy-n-propylacrylat, Hydroxyisopropylacrylat, Hydroxyisopropylmethacrylat, Hydroxy-n-butylacrylat, Hydroxyisobutylacrylat, Hydroxy-n-butylmethacrylat, Hydroxyisobutylmethacrylat, Hydroxyethylmonomaleinat, Hydroxyethyldimaleinat, Hydroxypropylmonomaleinat, Hydroxypropyldimaleinat, Hydroxy-n-butylmonomaleinat, Hydroxy-n-butyldimaleinat und Hydroxyethylmonoitaconat. Von den Hydroxyalkylestern der monoethylenisch ungesättigten Dicarbonsäuren kommen sowohl die Mono- und die Diester der Dicarbonsäuren mit den oben genannten mehrwertigen Alkoholen in Betracht.

Außerdem eignen sich Hydroxyalkylester von gesättigten $C_3$- bis $C_6$-Hydroxycarbonsäuren, wie Hydroxyessigsäureglykolmonoester, Milchsäureglykolmonoester und Hydroxypivalinsäure-neopentylglykolester.

Vorzugsweise werden Comonomere b) aus Maleinsäureanhydrid und Ethylenglykol, Polyethylenglykol eines Molekulargewichts bis 2.000, Glycerin, Diglycerin, Triglycerin, Tetraglycerin, sowie Polyglycerinen

eines Molekulargewichts bis 2.000, Pentaerythrit, Monosacchariden, Neopentylglykol, α,ω-Diaminen mit 2 bis 6 C-Atomen, α,ω-Diolen mit 3 bis 6 C-Atomen, und Hydroxypivalinsäureneopentylglykolmonoester eingesetzt. Comonomere, die sich von Ethylenglykol und α,ω-Diolen ableiten, können z.B. mit Hilfe folgender Formel dargestellt werden:

$$XOOC-CH=CH-CO-O-\left[CH_2-CH_2-O\right]_n-CO-CH=CH-COOX \qquad (I),$$

in der

X = H, Alkalimetall oder eine Ammoniumgruppe und

n = 1 bis 50 bedeutet.

Comonomere b), die durch Umsetzung von Maleinsäureanhydrid oder Maleinsäure mit α,ω-Diaminen entstehen, können z.B. mit Hilfe folgender Formel

$$XOOC-CH=CH-CO-NH-CH_2-(CH_2)_n-CH_2-NH-CO-CH=CH-COOX \qquad (II),$$

in der

X = H, Alkalimetall oder eine Ammoniumgruppe und

n = 0 bis 4 bedeutet, charakterisiert werden.

Die wasserlöslichen Copolymerisate werden durch Copolymerisieren von Monomerengemischen aus

a) 99,5 bis 80 Mol% wenigstens einer monoethylenisch ungesättigten $C_3$- bis $C_6$-Monocarbonsäure,

b) 0,5 bis 20 Mol% eines mindestens zwei ethylenisch ungesättigte, nicht konjugierte Doppelbindungen und mindestens eine -CO-OX -Gruppe und/oder deren Salz mit einer Alkalimetall-, Ammonium- oder Erdalkalimetallbase aufweisenden Comonomers in wäßriger Lösung in Gegenwart von Polymerisationsinitiatoren hergestellt.

Die Summe der Angaben in Mol% der Komponenten a) und b) beträgt immer 100. Die Copolymerisation wird ausschließlich in wäßrigem, vorzugsweise in rein wäßrigem Medium durchgeführt. Sie kann nach verschiedenen Verfahrensvarianten erfolgen, z.B. kann man die Monomeren a) und b) in Form wäßriger Lösungen diskontinuierlich in einer Batch-Fahrweise polymerisieren. Außerdem ist es möglich, zunächst einen Teil der Monomeren und einen Teil des Initiators im Polymerisationsreaktor vorzulegen, unter Inertgasatmosphäre auf die Polymerisationstemperatur zu erwärmen und dann die restlichen Monomeren und den Initiator nach Fortschritt der Polymerisation dem Reaktor zuzugeben. Die Polymerisationstemperaturen liegen im Bereich von 20 bis 200 °C. Bei Temperaturen oberhalb von 100 °C arbeitet man in Druckapparaturen. Vorzugsweise beträgt die Polymerisationstemperatur 40 bis 150 °C.

In einer bevorzugten Ausführungsform des Herstellverfahrens wird zunächst das Comonomer b) hergestellt, indem man

b1) Maleinsäureanhydrid, Itaconsäureanhydrid, Citraconsäureanhydrid oder deren Gemische in einem Reaktor vorlegt und darin mit

b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerine eines Molekulargewichts bis 2.000, Polyaminen, Polyalkylenpolyaminen, Polyethyleniminen, Aminoalkohole, Hydroxy-amino- oder -diaminocarbonsäuren, wie Lysin und Serin, wasserlöslichen Copolymerisaten aus Ethylenoxid und Kohlendioxid, Polyvinylalkohol eines Molekulargewichts bis 10.000, Allylalkohol, Allylamin, Hydroxyalkylester mit 2 bis 6 C-Atomen in der Hydroxyalkylgruppe von monoethylenisch ungesättigten $C_3$- bis $C_6$-Carbonsäuren oder von gesättigten $C_3$- bis $C_6$-Hydroxycarbonsäuren oder deren Mischungen

bei Temperaturen von 50 bis 200 °C umsetzt. Diese Umsetzung wird vorzugsweise in Abwesenheit von Wasser vorgenommen. Anstelle von den unter b1) genannten Verbindungen kann man jedoch auch die sich davon ableitenden Mono- oder Diester mit $C_1$- bis $C_4$-Alkoholen einsetzen. In diesen Fällen wird eine Umesterung bzw. Amidierung durchgeführt und vorzugsweise der dabei entstehende $C_1$- bis $C_4$-Alkohol aus dem Reaktionsgemisch abdestilliert. Bei Einsatz von Aminogruppen enthaltenden Verbindungen, die unter b2) genannt sind, entstehen bei der Umsetzung mit den Mono- oder Diestern der Säureanhydride gemäß b1) die entsprechenden Amide. Falls bei der Herstellung der Comonomeren b) Ester der Komponente b1) eingesetzt werden, so sind dies vorzugsweise Maleinsäuredimethylester, Maleinsäuremonomethylester, Itaconsäuredimethylester, Maleinsäuremonoisopropylester und Maleinsäurediisopropylester. Gegebenenfalls können übliche Veresterungskatalysatoren mitverwendet werden.

Pro Mol der Verbindungen b2) setzt man mindestens 0,5 Mol einer Verbindung der Komponente b1)

ein. Die Temperatur bei der Umsetzung beträgt vorzugsweise 50 bis 150 °C. Die Reaktion wird soweit geführt, daß praktisch ein quantitativer Umsatz der Komponente b2) gegeben ist. Das Comonomer b) kann in einer monoethylenisch ungesättigten $C_3$- bis $C_6$-Monocarbonsäure gemäß a) gelöst werden und dann zusammen mit den als Lösungsmittel dienenden Monomeren gemäß a) der Copolymerisation unterworfen werden.

Das zunächst hergestellte Comonomer b) kann jedoch auch im Reaktionsansatz, in dem es hergestellt wurde, verbleiben und darin zunächst durch Zugabe von Wasser bzw. verdünnter wäßriger Natronlauge gelöst werden. Diese Lösung wird anschließend durch Zugabe der Comonomeren a) copolymerisiert. Die Copolymerisation der Monomeren a) und b) wird bei einem pH-Wert der wäßrigen Lösung von 2 bis 9, vorzugsweise von 3 bis 7 durchgeführt. Die Monomeren a) und b), die jeweils Carbonsäuregruppen enthalten, können in Form der freien Carbonsäuren oder in neutralisierter, vorzugsweise in partiell neutralisierter Form copolymerisiert werden, wobei der Neutralisationsgrad 0 bis 100, vorzugsweise 10 bis 85 Mol% beträgt. Die Neutralisation erfolgt vorzugsweise mit Alkalimetall- oder Ammoniumbasen. Hierunter sind beispielsweise Natronlauge, Kalilauge, Soda, Pottasche oder Ammoniumbasen wie Ammoniak, $C_1$- bis $C_{18}$-Alkylamine, Dialkylamine, wie Dimethylamin, Di-n-butylamin, Dihexylamin, tertiäre Amine wie Trimethylamin, Triethylamin, Tributylamin, Triethanolamin sowie quaternisierte Stickstoffbasen, z.B. Tetramethylammoniumhydroxid, Trimethyllaurylammoniumhydroxid und Trimethylbenzylammoniumhydroxid zu verstehen. Vorzugsweise verwendet man zum Neutralisieren Natronlauge, Kalilauge oder Ammoniak. Die Neutralisation kann jedoch auch mit Erdalkalimetallbasen, z.B. Ca-Hydroxid oder $MgCO_3$, vorgenommen werden.

Die wasserlöslichen Copolymerisate können gegebenenfalls mit bis zu 10 Mol% Monomeren der Gruppe c) modifiziert sein. Als Comonomer c) werden mindestens zwei ethylenisch ungesättigte Doppelbindungen aufweisende Verbindungen eingesetzt, die nicht von der Definition der Verbindungen der Gruppe b) umfaßt werden. Geeignete Comonomere der Gruppe c) sind beispielsweise N,N'-Methylen-bisacrylamid, Polyethylenglykoldiacrylate und Polyethylenglykoldimethylacrylate, die sich jeweils von Polyethylenglykolen eines Molekulargewichts von 106 bis 4000 ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bzw. dreifach mit Acrylsäure oder Methacrylsäure veresterte Anlagerungsprodukte von Ethylenoxid und/oder Propylenoxid an Trimethylolpropan, mindestens zweifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldivinylether, Trimethylolpropandiallylether, Polyethylenglykoldivinylether, Butandioldivinylether, Pentaerythrittriallylether und/oder Divinylethylenharnstoff. Vorzugsweise setzt man wasserlösliche Comonomere ein, z.B. N,N'-Methylenbisacrylamid, Polyethylenglykoldiacrylate, Polyethylenglykoldimethacrylate, Pentaerythrittriallylether und/oder Divinylharnstoff.

Sofern die Comonomeren der Gruppe c) eingesetzt werden, verwendet man davon 0,05 bis 10 Mol%, vorzugsweise 0,1 bis 6 Mol%, bezogen auf die bei der Polymerisation anwesenden Monomeren.

Die Copolymerisate können gegebenenfalls als Komponente d) andere, mit a), b) und c) copolymerisierbare, wasserlösliche monoethylenisch ungesättigte Monomere enthalten. Geeignete Monomere dieser Art sind beispielsweise Acrylamid, Methacrylamid, 2-Acrylamido-2-methylpropansulfonsäure, Vinylsulfonsäure, Allylsulfonsäure, Vinylphosphonsäure, Allylphosphonsäure, Acrylnitril, Methacrylnitril, Dimethylaminoethylacryat, Diethylaminoethylacrylat, Diethylaminoethylmethacrylat, N-Vinylpyrrolidon, N-Vinylformamid, N-Vinylimidazol, N-Vinylimidazolin, 1-Vinyl-2-methyl-2-imidazolin, Vinylacetat sowie Mischungen der genannten Monomeren. Diejenigen Monomeren dieser Gruppe, die Säuregruppen enthalten, können bei der Copolymerisation in Form der freien Säuregruppen oder auch in partiell oder vollständig mit Alkalimetallbasen oder Ammoniumbasen neutralisierter Form eingesetzt werden. Die basischen Acrylate, wie Diethylaminoethylacrylat, werden mit Säuren neutralisiert bzw. quaternisiert und dann der Copolymerisation unterworfen. Die Monomeren d) sind zu 0 bis 30, vorzugsweise 0 bis 20 Mol% am Aufbau der Copolymerisate beteiligt. Sie dienen lediglich zur Modifizierung der Copolymerisate.

Als Polymerisationsinitiatoren werden vorzugsweise wasserlösliche radikalbildende Verbindungen eingesetzt, z.B. Wasserstoffperoxid, Peroxidisulfate und Mischungen aus Wasserstoffperoxid und Peroxidisulfaten. Geeignete Peroxidisulfate sind beispielsweise Lithium-, Natrium-, Kalium- und Ammoniumperoxidisulfat. Bei Mischungen aus Wasserstoffperoxid und Peroxidisulfat kann jedes beliebige Verhältnis eingestellt werden, vorzugsweise verwendet man Wasserstoffperoxid und Peroxidisulfat im Gewichtsverhältnis 3:1 bis 1:3. Mischungen aus Wasserstoffperoxid und Natriumperoxidisulfat werden vorzugsweise im Gewichtsverhältnis von 1:1 angewendet. Die oben genannten wasserlöslichen Polymerisationsinitiatoren können gegebenenfalls auch in Kombination mit Reduktionsmitteln, z.B. Eisen-II-sulfat, Natriumsulfit, Natriumhydrogensulfit, Natriumdithionit, Triethanolamin und Ascorbinsäure in Form der sogenannten Redox-Initiatoren verwendet werden. Geeignete wasserlösliche organische Peroxide sind beispielsweise Acetylacetonperoxid,

Methylethylketonperoxid, tert.-Butylhydroperoxid und Cumolhydroperoxid. Auch die wasserlöslichen organischen Peroxide können mit den oben genannten Reduktionsmitteln eingesetzt werden. Weitere wasserlösliche Polymerisationsinitiatoren sind Azostarter, z.B. 2,2'-Azobis(2-amidinopropan)dihydrochlorid, 2,2'-Azobis-(N,N'-dimethylen)isobutyramidin-dihydrochlorid, 2-(Carbamoylazo)isobutyronitril und 4,4'-Azobis-(4-cyanovaleriansäure). Man kann die Polymerisation auch mit wasserunlöslichen Initiatoren, wie Dibenzoylperoxid, Dicyclohexylperoxidicarbonat, Dilaurylperoxid oder Azoisobutyronitril, starten.

Die Initiatoren werden bei der Copolymerisation der Monomeren a), b) und gegebenenfalls d) in Mengen von 0,1 bis 10, vorzugsweise 0,5 bis 7 Gew.%, bezogen auf die Summe der bei der Polymerisation eingesetzten Monomeren, angewendet. Die Polymerisationsinitiatoren können entweder zusammen mit dem Monomeren oder getrennt davon in Form von wäßrigen Lösungen kontinuierlich oder absatzweise der zu polymerisierenden Mischung zugegeben werden. Falls bei der Copolymerisation die Monomeren c) mitverwendet werden, beträgt die Initiatormenge bis zu 30, vorzugsweise 5 bis 25 Gew.%, bezogen auf die Summe der bei der Polymerisation eingesetzten Monomeren.

Die Copolymerisation kann gegebenenfalls auch in Gegenwart von Reglern durchgeführt werden. Hierfür verwendet man vorzugsweise wasserlösliche Verbindungen, die entweder in jedem Verhältnis mit Wasser mischbar sind oder sich zu mehr als 5 Gew.% darin bei einer Temperatur von 20 °C lösen. Verbindungen dieser Art sind beispielsweise Aldehyde mit 1 bis 4 Kohlenstoffatomen, wie Formaldehyd, Acetaldehyd, Propionaldehyd, n-Butyraldehyd und Isobutyraldehyd, Ameisensäure, Ammoniumformiat, Hydroxylammoniumsalze, insbesondere Hydroxylammoniumsulfat, SH-Gruppen enthaltende Verbindungen mit bis zu 6 Kohlenstoffatomen, wie Thioglykolsäure, Mercaptoalkohole, wie Mercaptoethanol, Mercaptopropanol, Mercaptobutanole und Mercaptohexanol, ein- und mehrwertige Alkohole mit bis zu 6 C-Atomen, wie Isopropanol, Glykol, Glycerin und Isobutanol. Vorzugsweise in Betracht kommende Regler sind wasserlösliche Mercaptane, Ammoniumformiat und Hydroxylammoniumsulfat. Die Regler werden in Mengen von 0 bis 25 Gew.%, bezogen auf die Summe der bei der Polymerisation eingesetzten Monomeren, verwendet. Die besonders wirksamen Regler, die vorzugsweise in Betracht kommen, werden in Mengen bis höchstens 15 Gew.% eingesetzt. Sofern in Gegenwart von Reglern gearbeitet wird, beträgt die minimale Einsatzmenge 0,2 Gew.%, bezogen auf die zu polymerisierenden Monomeren. Bei Einsatz der Monomeren c) wird immer in Gegenwart eines Reglers copolymerisiert.

Bei einer Verfahrensvariante zur Herstellung der wasserlöslichen Copolymerisate wird das Comonomer (b) in einer monoethylenisch ungesättigten Carbonsäure gemäß (a) oder einer gegebenenfalls teilweise oder vollständig neutralisierten wäßrigen Lösung derselben gelöst und in Form dieser Lösung der Copolymerisation unterworfen. Beispielsweise polymerisiert man Monomergemische aus

a) Acrylsäure und/oder Methacrylsäure und

b) einem Comonomer aus b1) Maleinsäureanhydrid und b2) Ethylenglykol, Polyethylenglykol eines Molekulargewichts bis 2.000, Glycerin, Polyglycerinen eines Molekulargewichts bis 2.000, Pentaerythrit, Monosacchariden, Neopentylglykol, $\alpha,\omega$-Diaminen mit 2 bis 6 C-Atomen, $\alpha,\omega$-Diolen mit 3 bis 6 C-Atomen, Hydroxypivalinsäureneopentylglykolmonoester und gegebenenfalls

c) Polyethylenglykoldiacrylaten, Polyethylenglykoldimethacrylaten und Pentaerythrittriallylether.

Besonders bevorzugt ist die Herstellung von Copolymerisaten aus

a) Acrylsäure und/oder Methacrylsäure, und

b) einem der oben genannten Comonomeren der Formel (I) oder (II) oder aus

a) Acrylsäure und/oder Methacrylsäure,

b) einem der oben genannten Comonomeren der Formel (I) oder (II) und

c) Polyethylenglykoldiacrylaten, Polyethylenglykoldimethacrylaten und Pentaerythrittriallylether.

Bei der Copolymerisation der Monomeren a) und b) sowie jeweils gegebenenfalls c) und d) werden wäßrige Polymerisatlösungen erhalten, die einen Polymerisatgehalt bis zu 70 Gew.% aufweisen. Es ist selbstverständlich auch möglich, stark verdünnte, z.B. 1 %ige wäßrige Lösungen herzustellen, jedoch wird die Copolymerisation aus wirtschaftlichen Erwägungen so geführt, daß man mindestens 20 gew.%ige wäßrige Copolymerisatlösungen herstellt. Die Lösungen können nach der Copolymerisation auf einen pH-Wert im Bereich von 6,5 bis 7 eingestellt werden, sofern nicht die Polymerisation ohnehin in diesem Bereich durchgeführt wurde. Die Copolymerisate können durch Eindampfen der wäßrigen Lösungen gewonnen werden. Sie haben einen niedrigen Restmonomerengehalt und sind überraschenderweise biologisch abbaubar. Die biologische Abbaubarkeit der erfindungsgemäßen Copolymerisate beträgt nach DIN 38 412, Teil 24, Statischer Test (L25) bis zu 100 % und liegt in der Regel zwischen 20 und 95 %. Der K-Wert der Copolymerisate (bestimmt nach H. Fikentscher) beträgt vorzugsweise 20 bis 80.

Die Copolymerisate sind wasserlöslich. Falls sie sich in der freien Säureform nicht in Wasser lösen, so gelingt es, sie durch partielle oder vollständige Neutralisation mit NaOH, KOH, Ammoniak oder Aminen in eine wasserlösliche Form zu überführen. Copolymerisate, deren Alkali- oder Ammoniumsalze, von denen

sich mindestens 20 g pro Liter Wasser bei einer Temperatur von 20°C lösen, werden im vorliegenden Zusammenhang als wasserlöslich bezeichnet. Die Copolymerisate haben überraschenderweise den Vorteil, daß sie im Bereich geringer Polymerkonzentrationen keine Ausfällungen in Ca- und/oder Mg-Ionen enthaltenden wäßrigen Lösungen zeigen. Daher kann man stabile Lösungen der Copolymerisate in Trinkwasser herstellen, ohne daß es zu Ausfällungen der Erdalkalisalze der Copolymerisate kommt.

Die Copolymerisate werden als Beschichtungsmittel für Saatgut verwendet. Bei der Saatgutbeschichtung - hier können sämtliche Getreidearten, wie Weizen, Roggen, Hafer und Gerste sowie Mais und Lupinen sowie andere Saatgüter mit einem Polymerfilm umhüllt werden - wird ein schnelleres Keimen des Saatguts gegenüber dem nichtbeschichteten Saatgut erreicht. Pro 100 kg Saatgut verwendet man 0,1 bis 1 kg der Copolymerisate. Die Copolymerisate werden vorzugsweise in Form einer verdünnten wäßrigen Lösung auf das Saatgut gesprüht und bilden dort einen schützenden Polymerfilm. In den Polymerfilm können feinteilige, inerte Füllstoffe, z.B. Graphit, Quarz, Talkum oder Bentonit einer Teilchengröße von 20 bis 500 µm eingelagert sein. Die Füllstoffe werden vorzugsweise zusammen mit der Polymerlösung auf das zu beschichtende Material aufgetragen.

Die in den Beispielen angegebenen K-Werte wurden nach H. Fikentscher, Cellulosechemie, Band 13, 58-64 und 71-74 (1932) bestimmt, dabei bedeutet $K = k \cdot 10^3$. Die Messungen wurden am Natriumsalz in wäßriger Lösung bei 25°C, einem pH-Wert von 7 und einer Polymerkonzentration des Na-Salzes von 1 Gew.% vorgenommen. Sofern erfindungsgemäße Copolymerisate in Form anderer Salze oder der freien Säuren anfallen, müssen sie von der Bestimmung des K-Wertes zunächst in die Natriumsalze umgewandelt werden. Die in den Beispielen angegebenen Molekulargewichte beziehen sich auf das Zahlenmittel des Molekulargewichts. Die Daten zur biologischen Abbaubarkeit wurden nach DIN 38 412, Teil 24, Statischer Test (L25), bestimmt.

Beispiel 1

In einem 2 l-fassenden Glasreaktor, der mit Rührer, Thermometer, Stickstoffeinleitung und drei Zulaufgefäßen ausgestattet ist, werden 98 g (1 Mol) Maleinsäureanhydrid und 0,1 g p-Toluolsulfonsäure vorgelegt und zusammen mit den in Tabelle 1 angegebenen Mengen eines mehrwertigen Alkohols unter den ebenfalls in Tabelle 1 angegebenen Bedingungen und unter Rühren bis zur vollständigen Veresterung erhitzt. Man kühlt die Schmelze jeweils auf 20°C ab und gibt dann 200 ml Wasser und gegebenenfalls die in Tabelle 1 angegebenen Mengen an Regler hinzu und erwärmt die wäßrige Lösung innerhalb von 20 min unter Hindurchleiten von Stickstoff auf 80°C.

Die Polymerisation wird anschließend in der Weise durchgeführt, daß man die jeweils in Tabelle 1 angegebenen ethylenisch ungesättigten Carbonsäuren und die äquimolare Menge 25 %iger wäßriger Natronlauge über einen Zeitraum von 4 Stunden und gleich beginnend mit der Monomerenzugabe aus dem dritten Zulaufgefäß der Initiator, gelöst in 100 ml Wasser, über einen Zeitraum von 5 Stunden zutropft. Während der Monomeren- und Initiatorzugabe wird das Reaktionsgemisch unter Stickstoffatmosphäre gerührt. Die Polymerisation wird bei 80°C durchgeführt. Nach Beendigung der Initiatorzugabe wird das Reaktionsgemisch noch 1 Stunde bei einer Temperatur von 80°C nachpolymerisiert und nach dem Abkühlen auf 20°C mit 25 %iger wäßriger Natronlauge auf einen pH-Wert von 6,5 eingestellt. Die Eigenschaften der erhaltenen Copolymerisate sind in Tabelle 1 angegeben.

Die biologische Abbaubarkeit der Copolymerisate wurde zusätzlich durch Bakterienwachstumsversuche nachgewiesen. Hierfür wurde auf festen Nährböden ein Anreicherungsmedium hergestellt und mit 18 g/l Agar verfestigt. Das Anreicherungsmedium hatte folgende Zusammensetzung:

| | |
|---|---|
| Dinatriumhydrogenphosphat mit 2 Wasser | 7 g/l |
| Kaliumdihydrogenphosphat | 3 g/l |
| Natriumchlorid | 0,5 g/l |
| Ammoniumchlorid | 1,0 g/l |
| Lösung von Spurenelementen | 2,5 ml/l pH 7.0 |
| (hergestellt nach T. Bauchop und S.R. Elsden, J.gen.Mikrobiol. 23, 457-469 (1960)). | |

Die in Tabelle 1 unter Nr. 1, 4, 7 und 11 beschriebenen Copolymerisate wurden den Nährmedien jeweils in Konzentrationen von 10 g/l zugegeben.

Erdproben wurden entweder in Flüssigmedium gegeben und dort 7 Tage bei 30°C geschüttelt oder als wäßrige Suspension direkt auf feste Nährböden gebracht und ebenfalls bei 30°C inkubiert. Die Anreicherungskulturen in Flüssigmedium wurden nach 7 Tagen auf feste Nährböden übertragen. Von diesen Platten

wurden gut wachsende Kolonien abgeimpft und im Vereinzelungsausstrich auf Einheitlichkeit geprüft.

Auf diese Weise wurden Bakterienreinkulturen isoliert, die auf den untersuchten Copolymerisaten eindeutig Wachstum zeigten.

Wurden die oben beschriebenen Bakterienwachstumsversuche zum Vergleich mit einem Copolymerisat aus 30 Gew.% Maleinsäure und 70 Gew.% Acrylsäure vom K-Wert 60 durchgeführt, so konnte kein Bakterienwachstum nachgewiesen werden.

Tabelle 1

| Nr. | Veresterung mit ... Mol mehrwertiger Alkohole | bei [°C] | Dauer [h] | Copolymerisation Monomer (a) [Mol] | Monomer (a) [Mol%] | Comonomer (b) [Mol] | Comonomer (b) [Mol%] | ... Gew.% Initiator, bezogen auf a)+b) | ... Gew.% Regler, bezogen auf a)+b) | Copolymerisat K-Wert | Restmonomergehalt [Gew.%] | biologische Abbaubarkeit [%] |
|---|---|---|---|---|---|---|---|---|---|---|---|---|
| 1 | 0,5 Ethylenglykol | 70 | 1 | 4AS | 88,9 | 0,5 | 11,1 | $H_2O_2$ 5 | - | 43,7 | 0,18 | 61 |
| 2 | 0,5 Butandiol | 70 | 1 | 4AS | 88,9 | 0,5 | 11,1 | $H_2O_2$ 5 | - | 45,4 | 0,21 | 63 |
| 3 | 0,5 Neopentylglykol | 70 | 1,5 | 4AS | 88,9 | 0,5 | 11,1 | $H_2O_2$ 5 | - | 38,2 | 0,15 | 72 |
| 4 | 0,5 $PEG_{400}$ | 80 | 2,5 | 4AS | 88,9 | 0,5 | 11,1 | $H_2O_2$ 5 | - | 17,3 | 0,28 | 91 |
| 5 | 0,5 HPN | 80 | 2,5 | 4AS | 88,9 | 0,5 | 11,1 | $H_2O_2$ 5 | - | 37,8 | 0,21 | 66 |
| 6 | 0,5 Neopentylglykol | 70 | 1,5 | 3AS | 85,7 | 0,5 | 14,3 | $H_2O_2$ 5<br>$Na_2S_2O_8$ 1 | - | 15,8 | 0,23 | 78 |
| 7 | 0,33 Glycerin | 90 | 4,5 | 4AS | 92,4 | 0,33 | 7,6 | $H_2O_2$ 5<br>$Na_2S_2O_8$ 1 | - | 19,2 | 0,19 | 82 |
| 8 | 0,5 Neopentylglykol | 70 | 1,5 | 5AS | 90,9 | 0,5 | 9,1 | $H_2O_2$ 5<br>$Na_2S_2O_8$ 1 | Mercaptoethanol 1 | 32,4 | 0,23 | 62 |
| 9 | 0,5 Neopentylglykol | 70 | 1,5 | 5MAS | 90,9 | 0,5 | 9,1 | $H_2O_2$ 5<br>$Na_2S_2O_8$ 1 | - | 29,8 | 0,19 | 58 |
| 10 | 0,5 Ethylenglykol | 70 | 1 | 5MAS | 90,9 | 0,5 | 9,1 | $H_2O_2$ 5<br>$Na_2S_2O_8$ 1 | - | 24,2 | 0,17 | 71 |
| 11 | 0,25 Pentaerythrit | 100 | 3 | 5AS | 95,2 | 0,25 | 4,8 | $H_2O_2$ 5<br>$Na_2S_2O_8$ 1 | Hydroxylammoniumsulfat 1 | 32,1 | 0,24 | 63 |

Für die unter Nr. 1 und 4 in Tabelle 1 angegebenen Copolymerisate wurde das Ausfällverhalten bei pH 7,5 in wäßrigen Lösungen geprüft, die 10 bis 10.000 mg/l Ca-Ionen (in Form von $CaCl_2$) enthielten. Folgende Ca-Ionenkonzentrationen wurden getestet: 10, 50, 75, 100, 150, 500, 1000 und 10.000 mg/l. Die Copolymerkonzentrationen wurden von 0,1 bis 7 mg/l variiert (geprüft wurden folgende Konzentrationen: 0,1, 0,5, 1, 0, 2, 3, 4 und 7 mg Copolymerisat/l Wasser). Dabei traten selbst nach 20tägiger Lagerung der wäßrigen Lösungen der Copolymerisate in Gegenwart von Ca-Ionen keine Ausfällungen auf, während ein Copolymerisat aus 30 Gew.% Maleinsäure und 70 Gew.% Acrylsäure vom K-Wert 60 unter den angegebenen Prüfbedingungen immer Ausfällungen ergab.

Beispiel 2

Herstellung des Comonomers b) der Formel

$$HO\text{-}CO\text{-}CH = CH\text{-}CO\text{-}NH\text{-}CH_2\text{-}(CH_2)_n\text{-}CH_2\text{-}NH\text{-}CO\text{-}CH = CH\text{-}CO\text{-}OH \qquad (I)$$

Comonomer Ia: n = 0 in Formel I

In einem 1 l-fassenden Glasreaktor, der mit Rührer, Kühler und einem Zulaufgefäß ausgestattet ist, wird eine Lösung von 1,5 Mol (147 g) Maleinsäureanhydrid in 350 g Dimethylformamid vorgelegt. Zu dieser Lösung gibt man bei einer Temperatur von 40 °C über einen Zeitraum von 1,5 Stunden eine Lösung von 0,75 Mol Ethylendiamin in 150 g Dimethylformamid. Die Umsetzung wird in dem Temperaturbereich von 40 bis 60 °C durchgeführt. Die dabei entstehende Suspension wird noch 1 Stunde nach Beendigung der Ethylendiaminzugabe bei 60 °C gerührt. Die Suspension wird anschließend durch Abdestillieren von Dimethylformamid unter vermindertem Druck eingeengt und der verbleibende Rückstand abfiltriert. Der Filterkuchen wird kurz mit Aceton aufgekocht. Danach filtriert man die Feststoffe ab und trocknet sie. Man erhält das Comonomer der oben angegebenen Formel I, in der n = 0 ist, in einer Ausbeute von 91 %.

Herstellung von Comonomer Ib) n = 4 in Formel I

Man verfährt wie bei der Herstellung von Comonomer Ia) beschrieben, setzt jedoch anstelle von Ethylendiamin 0,75 Mol Hexamethylendiamin-1,6 ein. Man erhält auf diese Weise das Comonomer Ib) in einer Ausbeute von 89 %.

Copolymerisation

In einem 2 l-fassenden Glasreaktor, der mit Rührer, Thermometer, Stickstoffeinleitung, Kühler und zwei Zulaufgefäßen ausgestattet ist, werden 0,5 Mol des Comonomeren Ia, 300 ml Wasser und 2 Gew.%, bezogen auf Comonomer Ia und Acrylsäure, vorgelegt und unter Rühren und Durchleiten von Stickstoff auf eine Temperatur von 90 °C erwärmt. Zur Copolymerisation fügt man dann über einen Zeitraum von 5 Stunden 1075 g einer 35 %igen wäßrigen Natriumacrylatlösung (4 Mol Natriumacrylat) und über einen Zeitraum von 6 Stunden 33 g 2,2'-Azo-bis(2-amidinopropan)-dihydrochlorid, gelöst in 170 ml Wasser zu. Die Copolymerisation wird bei einer Temperatur von 90 °C und unter Hindurchleiten von Stickstoff durchgeführt. Man erhält eine viskose gelb-braune Lösung, die 1 Stunde nach Beendigung der Initiatorzugabe noch bei einer Temperatur von 90 °C nachpolymerisiert und anschließend auf 30 °C abgekühlt und mit 25 %iger wäßriger Natronlauge auf einen pH-Wert von 6 eingestellt wird. Die Zusammensetzung der Monomermischung während der Copolymerisation beträgt 88,9 Mol% Acrylsäure und 11,1 Mol% an Comonomer Ia. Man erhält ein Copolymerisat mit einem K-Wert von 36,2 und einem Restmonomergehalt an Acrylsäure von 0,1 Gew.%. Die biologische Abbaubarkeit beträgt 36 %.

Die Copolymerisation des Comonomers Ib wird in gleicher Weise wie oben für das Comonomer Ia beschrieben, durchgeführt. Der Copolymerisation wird auch hier eine Monomermischung aus 88,9 Mol% Acrylsäure und 11,1 Mol% Comonomer Ib unterworfen. Man erhält auf diese Weise ein Copolymerisat vom K-Wert 38,7 mit einem Restmonomergehalt von 0,22 % Acrylsäure. Die biologische Abbaubarkeit beträgt 41 %.

Beispiel 3

In einem 2 l-fassenden Glasreaktor, der mit einem Rührer, Thermometer und drei Zulaufgefäßen

ausgestattet ist, von denen eines beheizbar und rührbar ist, werden 500 ml Wasser vorgelegt und auf 90 °C erhitzt. Gleichzeitig werden in dem beheizbaren Zulaufgefäß 98 g (1 Mol) Maleinsäureanhydrid auf 80 °C erwärmt und über einen Zeitraum von 3 Stunden portionsweise mit 0,5 Mol Serin versetzt. Nach Zugabe des Serins rührt man das Reaktionsgemisch in dem beheizbaren Tropftrichter noch 1 Stunde bei 80 °C. Danach ist die Umsetzung des Maleinsäureanhydrids mit Serin zum Comonomer b) abgeschlossen.

Die Copolymerisation des Monomeren b) wird dann in der Weise durchgeführt, daß man über einen Zeitraum von 5 Stunden 1075 g einer 35 %igen Natriumacrylatlösung (4 Mol Natriumacrylat) und die Schmelze des Comonomer b) und gleichzeitig beginnend über einen Zeitraum von 6 Stunden 90 g 30 %iges Wasserstoffperoxid, das in 60 ml Wasser gelöst ist, zu der auf 90 °C erwärmten Vorlage unter einem Stickstoffstrom zutropft. Auf diese Weise wird eine Monomerenmischung aus 88,9 Mol% Natriumacrylat und 11,1 Mol% Vernetzer b) (Umsetzungsprodukt aus Maleinsäureanhydrid und Serin) der Copolymerisation unterworfen. Im Verlauf der Copolymerisation bildet sich eine viskose Lösung, die noch 1 Stunde nach Beendigung der Initiatorzugabe auf eine Temperatur von 95 °C erwärmt, danach abgekühlt und durch Zugabe von 25 %iger wäßriger Natronlauge auf einen pH-Wert von 6,5 eingestellt wird. Man erhält ein Copolymerisat, das einen K-Wert von 43,6 und einen Restmonomerengehalt an Acrylsäure von 0,13 Gew.% aufweist. Die biologische Abbaubarkeit beträgt 43 %.

Beispiel 4

Beispiel 3 wird mit der Ausnahme wiederholt, daß man zur Herstellung des Comonomers anstelle von Serin 0,5 Mol Lysin einsetzt. Bei der Copolymerisation des Monomerengemisches aus 88,9 Mol% Natriumacrylat und 11,1 Mol% des Comonomeren b) aus Maleinsäureanhydrid und Lysin erhält man ein Copolymerisat mit einem K-Wert von 39,2, das einen Restmonomerengehalt von 0,19 Gew.% hat. Die biologische Abbaubarkeit beträgt 36 %.

Beispiele 5 bis 9

In einem 4 l-fassenden Glasreaktor, der ausgestattet ist mit Rührer, Thermometer, Stickstoffeinleitung und sechs Zulaufgefäßen werden 800 ml Wasser vorgelegt und unter Stickstoffspülung auf 90 °C erwärmt. Während dieser Zeit werden die Zulaufgefäße, wie im folgenden angegeben, gefüllt:

| | |
|---|---|
| Zulauf I: | Lösung von p Mol des in der Tabelle angegebenen Comonomeren in 2 Mol Acrylsäure |
| Zulauf II: | 2 Mol Acrylsäure |
| Zulauf III: | Lösung von m Gew.% Regler in 100 ml Wasser |
| Zulauf IV: | Lösung von n Mol des in der folgenden Tabelle aufgeführten Dimaleinats in 300 ml Wasser |
| Zulauf V: | 640 g 25 %ige wäßrige Natronlauge |
| Zulauf VI: | 25 g Natriumpersulfat gelöst in 500 ml 30 %igem $H_2O_2$ |

Bei 90 °C werden nun gleichbeginnend die Zuläufe I und III über einen Zeitraum von 2 h, Zulauf IV innerhalb von 4 h und Zulauf VI über einen Zeitraum von 5 1/2 h zudosiert. Zwei Stunden nach Beginn der Monomerenzugabe wird Zulauf II über einen Zeitraum von 2 h und Zulauf V über einen Zeitraum von 3 h zugetropft.

Anschließend läßt man 1 h nachreagieren und stellt den Ansatz nach dem Abkühlen mit 25 %iger Natronlauge auf pH 7.

Die in den Beispielen eingesetzten Mengen an Comonomer b) und c), die Mengen Acrylsäure (Comonomer a)) sowie die verwendeten Regler (Gew.%) und die K-Werte der erhaltenen Copolymerisate sind in Tabelle 2 aufgeführt.

Tabelle 2

| Beispiel Nr. | Comonomer a) [Mol]: [Mol%] | Comonomer b) m[Mol]: [Mol%] | Comonomer c) n[Mol]: [Mol%] | Regler m [Gew.%] | K-Wert |
|---|---|---|---|---|---|
| 5 | Acrylsäure 4; 87,9 | Ethylenglykol-dimaleinat 0,45; 9,9 | Ethylenglykol-diacrylat 0,10; 2,2 | Mercapto-ethanol 5 | 36,1 |
| 6 | Acrylsäure 4; 86,0 | Diethylenglykol-dimaleinat 0,60; 12,9 | $PEG_{400}$-diacrylat 0,05; 1,1 | Mercapto-ethanol 8 | 32,3 |
| 7 | Acrylsäure 4; 85,1 | Ethylenglykol-dimaleinat 0,50; 10,6 | Triethylenglykol-diacrylat 0,20; 4,3 | Mercapto-ethanol 7 | 34,1 |
| 8 | Acrylsäure 4; 82,5 | $PEG_{400}$-Dimaleinat 0,70; 14,4 | Tetraethylenglykol-diacrylat 0,15; 3,1 | Mercapto-ethanol 10 | 28,7 |
| 9 | Acrylsäure 4; 83,3 | Triethylenglykoldimaleinat 0,55; 11,5 | Glycerin-diacrylat 0,25; 5,2 | Mercapto-ethanol 11 | 28,3 |

$PEG_X$ ≙ Polyethylenglykol eines mittleren Molekulargewichts von X

Die biologische Abbaubarkeit der Copolymerisate wurde durch Bakterienwachstumsversuche nachgewiesen. Hierfür wurde auf festen Nährböden ein Anreicherungsmedium hergestellt und mit 18 g/l Agar verfestigt. Das Anreicherungsmedium hatte folgende Zusammensetzung:

| | |
|---|---|
| Dinatriumhydrogenphosphat mit 2 Wasser | 7 g/l |
| Kaliumdihydrogenphosphat | 3 g/l |
| Natriumchlorid | 0,5 g/l |
| Ammoniumchlorid | 1,0 g/l |
| Lösung von Spurenelementen | 2,5 ml/l pH 7.0 |
| (hergestellt nach T. Bauchop und S.R. Elsden, J.gen.Mikrobiol. 23, 457-469 (1960)). | |

Die in der Tabelle beschriebenen Copolymerisate wurden den Nährmedien jeweils in Konzentrationen von 10 g/l zugegeben.

Erdproben wurden entweder in Flüssigmedium gegeben und dort 7 Tage bei 30 °C geschüttelt oder als wäßrige Suspension direkt auf feste Nährböden gebracht und ebenfalls bei 30 °C inkubiert. Die Anreicherungskulturen in Flüssigmedium wurden nach 7 Tagen auf feste Nährböden übertragen. Von diesen Platten wurden gut wachsende Kolonien abgeimpft und im Vereinzelungsausstrich auf Einheitlichkeit geprüft.

Auf diese Weise wurden Bakterienreinkulturen isoliert, die auf den untersuchten Copolymerisaten eindeutig Wachstum zeigten.

Wurden die oben beschriebenen Bakterienwachstumsversuche zum Vergleich mit einem Copolymerisat aus 30 Gew.% Maleinsäure und 70 Gew.% Acrylsäure vom K-Wert 60 durchgeführt, so konnte kein Bakterienwachstum nachgewiesen werden.

## Patentansprüche

**1.** Wasserlösliche Copolymerisate auf Basis von monoethylenisch ungesättigten Carbonsäuren mit 3 bis 6 C-Atomen, dadurch gekennzeichnet, daß die Copolymerisate einen K-Wert von 15 bis 120 (bestimmt am Natriumsalz nach H. Fikentscher in wäßriger Lösung bei 25 °C, einem pH-Wert von 7 und einer Polymerkonzentration des Na-Salzes von 1 Gew.%) haben und

a) 99,5 bis 80 Mol% wenigstens einer monoethylenisch ungesättigten $C_3$- bis $C_6$-Monocarbonsäure und

b) 0,5 bis 20 Mol% wenigstens eines mindestens zwei ethylenisch ungesättigte, nicht konjugierte Doppelbindungen aufweisenden Comonomers, das mindestens eine -CO-OX -Gruppe hat, in der X ein Wasserstoff-, ein Alkalimetall- oder Erdalkalimetalläquivalent oder eine Ammoniumgruppe bedeutet,

mit der Maßgabe einpolymerisiert enthalten, daß die Summe der Angaben in Mol% a) und b) immer 100 beträgt.

**2.** Wasserlösliche Copolymerisate nach Anspruch 1, dadurch gekennzeichnet, daß sie

a) mindestens 80 Mol% wenigstens einer monoethylenisch ungesättigten $C_3$- bis $C_6$-Monocarbonsäure,

b) 0,5 bis 20 Mol% wenigstens eines mindestens zwei ethylenisch ungesättigte, nicht konjugierte Doppelbindungen aufweisenden Comonomers, das mindestens eine -CO-OX -Gruppe hat, in der X ein Wasserstoff-, ein Alkalimetall- oder Erdalkalimetalläquivalent oder eine Ammoniumgruppe bedeutet, und

c) 0,05 bis 10 Mol% wenigstens eines von b) verschiedenen Comonomers, das mindestens zwei ethylenisch ungesättigte, nicht konjugierte Doppelbedingungen aufweist

mit der Maßgabe einpolymerisiert enthalten, daß die Summe der Angaben in Mol% a), b) und c) immer 100 beträgt.

**3.** Verfahren zur Herstellung von wasserlöslichen Copolymerisaten nach Anspruch 1, dadurch gekennzeichnet, daß man Monomerengemische aus

a) 99,5 bis 80 Mol% wenigstens einer monoethylenisch ungesättigten $C_3$- bis $C_6$-Monocarbonsäure mit

b) 0,5 bis 20 Mol% wenigstens eines mindestens zwei ethylenisch ungesättigte, nicht konjugierte Doppelbindungen aufweisenden Comonomers, das mindestens eine -CO-OX -Gruppe hat, in der X ein Wasserstoff-, ein Alkalimetall- oder Erdalkalimetalläquivalent oder eine Ammoniumgruppe bedeutet,

in wäßriger Lösung in Gegenwart von Polymerisationsinitiatoren und gegebenenfalls Reglern copolymerisiert, wobei die Summe der Angaben in Mol% a) und b) immer 100 beträgt.

**4.** Verfahren zur Herstellung von wasserlöslichen Copolymerisaten nach Anspruch 2, dadurch gekennzeichnet, daß man Monomergemische aus

a) mindestens 80 Mol% wenigstens einer monoethylenisch ungesättigten $C_3$- bis $C_6$-Monocarbonsäure,

b) 0,5 bis 20 Mol% wenigstens eines mindestens zwei ethylenisch ungesättigte, nicht konjugierte Doppelbindungen aufweisenden Comonomers, das mindestens eine -CO-OX -Gruppe hat, in der X ein Wasserstoff-, ein Alkalimetall- oder Erdalkalimetalläquivalent oder eine Ammoniumgruppe bedeutet, und

c) 0,05 bis 10 Mol% wenigstens eines von b) verschiedenen Comonomers, das mindestens zwei ethylenisch ungesättigte, nicht konjugierte Doppelbedingungen aufweist

in wäßriger Lösung in Gegenwart von Polymerisationsinitiatoren und Reglern copolymerisiert, wobei die Summe der Angaben in Mol% a), b) und c) immer 100 beträgt.

**5.** Verfahren nach Anspruch 3 oder 4, dadurch gekennzeichnet, daß man zunächst das Comonomer (b) herstellt durch Umsetzung von

b1) Maleinsäureanhydrid, Itaconsäureanhydrid, Citraconsäureanhydrid oder deren Gemischen mit

b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerinen eines Molekulargewichts bis 2.000, Polyaminen, Polyalkylenpolyaminen, Polyethyleniminen, Aminoalkoholen, Hydroxy-amino- oder -diaminocarbonsäuren, wasserlöslichen Copolymerisaten aus Ethylenoxid und Kohlendioxid, Polyvinylalkohol eines Molekulargewichts bis 10.000, Allylalkohol, Allylamin, Hydroxyalkylester mit 2 bis 6 C-Atomen in der Hydroxyalkylgruppe von monoethylenisch ungesättigten $C_3$- bis $C_6$-Carbonsäuren oder von gesättigten $C_3$- bis $C_6$-Hydroxycarbonsäuren oder deren Mischungen

bei Temperaturen von 50 bis 200°C und es dann in wäßriger Lösung mit den Monomeren a) bei Temperaturen bis 200°C copolymerisiert.

**6.** Verfahren nach mindestens einem der Ansprüche 3 bis 4, dadurch gekennzeichnet, daß das Comonomer (b) in einer monoethylenisch ungesättigten Carbonsäure gemäß (a) oder einer gegebenenfalls teilweise oder vollständig neutralisierten wäßrigen Lösung derselben gelöst und in Form dieser Lösung der Copolymerisation unterworfen wird.

**7.** Verfahren nach mindestens einem der Ansprüche 3 bis 6, dadurch gekennzeichnet, daß man Monomergemische aus

a) Acrylsäure und/oder Methacrylsäure und

b) einem Comonomer aus b1) Maleinsäureanhydrid und b2) Ethylenglykol, Polyethylenglykol eines Molekulargewichts bis 2.000, Glycerin, Polyglycerinen eines Molekulargewichts bis 2.000, Pentaerythrit, Monosacchariden, Neopentylglykol, $\alpha,\omega$-Diaminen mit 2 bis 6 C-Atomen, $\alpha,\omega$-Diolen mit 3 bis 6 C-Atomen, Hydroxypivalinsäureneopentylglykolmonoester und gegebenenfalls

c) Polyethylenglykoldiacrylaten, Polyethylenglykoldimethacrylaten und Pentaerythrittriallylether

der Copolymerisation unterwirft.

**8.** Verfahren nach mindestens einem der Ansprüche 3 bis 7, dadurch gekennzeichnet, daß der pH-Wert der wäßrigen Lösung während der Copolymerisation 2 bis 9 beträgt.

**9.** Verfahren nach mindestens einem der Ansprüche 3 bis 8, dadurch gekennzeichnet, daß man Monomergemische aus

a) Acrylsäure und/oder Methacrylsäure,

b) einer Verbindung der Formel

$$XOOC-CH=CH-CO-O-\left[CH_2-CH_2-O\right]_n-CO-CH=CH-COOX \qquad (I),$$

in der

X = H, Alkalimetall oder eine Ammoniumgruppe und

n = 1 bis 50 bedeutet, und gegebenenfalls

c) Polyethylenglykoldiacrylaten, Polyethylenglykoldimethacrylaten und Pentaerythrittriallylether

der Copolymerisation unterwirft.

**10.** Verfahren nach mindestens einem der Ansprüche 3 bis 8, dadurch gekennzeichnet, daß man Monomergemische aus
a) Acrylsäure und/oder Methacrylsäure,
b) einer Verbindung der Formel

$$XOOC\text{-}CH=CH\text{-}CO\text{-}NH\text{-}CH_2\text{-}(CH_2)_n\text{-}CH_2\text{-}NH\text{-}CO\text{-}CH=CH\text{-}COOX \quad (II),$$

in der
X = H, Alkalimetall oder eine Ammoniumgruppe und
n = 0 bis 4 bedeutet,
der Copolymerisation unterwirft.

**11.** Verfahren nach den Ansprüchen 9 oder 10, dadurch gekennzeichnet, daß die Monomeren a) und b) jeweils in partiell mit Alkalimetall- oder Ammoniumbasen neutralisierter Form copolymerisiert werden, wobei der Neutralisationsgrad 10 bis 85 Mol% beträgt.

**12.** Verwendung der wasserlöslichen Copolymerisate nach Anspruch 1 oder 2 als Beschichtungsmittel für Saatgut.

**Claims**

**1.** A water-soluble copolymer based on monoethylenically unsaturated carboxylic acids of 3 to 6 carbon atoms, wherein the copolymer has a K value of from 15 to 120 (determined on the sodium salt according to H. Fikentscher in aqueous solution at 25 °C, a pH of 7 and a polymer concentration of the Na salt of 1% by weight) and contains, as copolymerized units,
a) from 99.5 to 80 mol % of one or more monoethylenically unsaturated $C_3$-$C_6$-monocarboxylic acids and
b) from 0.5 to 20 mol % of one or more comonomers which possess two or more ethylenically unsaturated, non-conjugated double bonds and one or more -CO-OX groups in which X is hydrogen, one equivalent of an alkali metal or alkaline earth metal or an ammonium group,
with the proviso that the sum of the mol % a) and b) is always 100.

**2.** A water-soluble copolymer as claimed in claim 1, wherein
a) not less than 80 mol % of one or more monoethylenically unsaturated $C_3$-$C_6$-monocarboxylic acids,
b) from 0.5 to 20 mol % of one or more comonomers which possess two or more ethylenically unsaturated, non-conjugated double bonds and one or more -CO-OX groups in which X is hydrogen, one equivalent of an alkali metal or alkaline earth metal or an ammonium group, and
c) from 0.05 to 10 mol % of one or more comonomers which differ from b) and possess two or more ethylenically unsaturated, non-conjugated double bonds,
with the proviso that the sum of the mol % a), b) and c) is always 100.

**3.** A process for the preparation of a water-soluble copolymer as claimed in claim 1, wherein a monomer mixture of
a) from 99.5 to 80 mol % of one or more monoethylenically unsaturated $C_3$-$C_6$-monocarboxylic acids and
b) from 0.5 to 20 mol % of one or more comonomers which possess two or more ethylenically unsaturated, non-conjugated double bonds and one or more -CO-OX groups in which X is hydrogen, one equivalent of an alkali metal or alkaline earth metal or an ammonium group,
is copolymerized in aqueous solution in the presence of a polymerization initiator and, if required, a regulator, the sum of the mol % a) and b) always being 100.

**4.** A process for the preparation of a water-soluble copolymer as claimed in claim 2, wherein a monomer mixture of
a) not less than 80 mol % of one or more monoethylenically unsaturated $C_3$-$C_6$-monocarboxylic acids,

b) from 0.5 to 20 mol % of one or more comonomers which possess two or more ethylenically unsaturated, non-conjugated double bonds and one or more -CO-OX groups in which X is hydrogen, one equivalent of an alkali metal or alkaline earth metal or an ammonium group, and

c) from 0.05 to 10 mol % of one or more comonomers which differ from b) and possess two or more ethylenically unsaturated, non-conjugated double bonds

is copolymerized in aqueous solution in the presence of a polymerization initiator and a regulator, the sum of the mol % a), b) and c) always being 100.

**5.** A process as claimed in claim 3 or 4, wherein the comonomer b) is first prepared by reacting

b1) maleic anhydride, itaconic anhydride or citraconic anhydride, or a mixture of these, with

b2) polyhydric alcohols of 2 to 6 carbon atoms, water-soluble or water-insoluble polyalkylene glycols having a molecular weight of up to about 400, water-soluble polyalkylene glycols having a molecular weight from above about 400 to 10,000, polyglycerols having a molecular weight of up to 2,000, polyamines, polyalkylenepolyamines, polyethyleneimines, aminoalcohols, hydroxyamino- or -diaminocarboxylic acids, water-soluble copolymers of ethylene oxide and carbon dioxide, polyvinyl alcohol having a molecular weight of up to 10,000, allyl alcohol, allylamine, hydroxyalkyl esters, where hydroxyalkyl is of 2 to 6 carbon atoms, of monoethylenically unsaturated $C_3$-$C_6$-carboxylic acids or of saturated $C_3$-$C_6$-hydroxycarboxylic acids or mixtures of these

at from 50 to 200 °C, and then copolymerizing the said comonomer in aqueous solution with the monomers a) at up to 200 °C.

**6.** A process as claimed in one or both of claims 3 and 4, wherein the comonomer b) is dissolved in a monoethylenically unsaturated carboxylic acid (a) or a partially or completely neturalized aqueous solution of the said carboxylic acid and is subjected to the copolymerization in the form of this solution.

**7.** A process as claimed in one or more of claims 3 to 6, wherein a monomer mixture of

a) acrylic acid and/or methacrylic acid and

b) a comonomer of b1) maleic anhydride and b2) ethylene glycol, polyethylene glycol having a molecular weight of up to 2,000, glycerol, polyglycerols having a molecular weight of up to 2,000, pentaerythritol, monosaccharides, neopentyl glycol, $\alpha,\omega$-diamines of 2 to 6 carbon atoms, $\alpha,\omega$-diols of 3 to 6 carbon atoms or neopentyl glycol monohydroxypivalate and, if required,

c) polyethylene glycol diacrylates, polyethylene glycol dimethacrylates or pentaerythritol triallyl ether

is subjected to the copolymerization.

**8.** A process as claimed in one or more of claims 3 to 7, wherein the pH of the aqueous solution during the copolymerization is from 2 to 9.

**9.** A process as claimed in one or more of claims 3 to 8, wherein a monomer mixture of

a) acrylic acid and/or methacrylic acid,

b) a compound of the formula

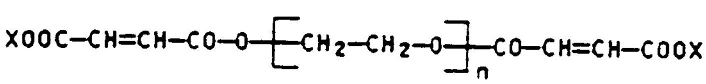 (I),

where X is H, an alkali metal or an ammonium group and n is from 1 to 50, and, if required,

c) polyethylene glycol diacrylates, polyethylene glycol dimethacrylates or pentaerythritol triallyl ether

is subjected to the copolymerization.

**10.** A process as claimed in one or more of claims 3 to 8, wherein a monomer mixture of

a) acrylic acid and/or methacrylic acid and

b) a compound of the formula

$$XOOC\text{-}CH=CH\text{-}CO\text{-}NH\text{-}CH_2\text{-}(CH_2)_n\text{-}CH_2\text{-}NH\text{-}CO\text{-}CH=CH\text{-}COOX \qquad (II)$$

where X is H, an alkali metal or an ammonium group and n is from 0 to 4,

is subjected to the copolymerization.

11. A process as claimed in claim 9 or 10, wherein the monomers a) and b) are each copolymerized in a form partially neutralized with an alkali metal or ammonium base, the degree of neutralization being from 10 to 85 mol %.

12. Use of a water-soluble copolymer as claimed in claim 1 or 2 as a coating agent for seed.

**Revendications**

1. Copolymères solubles dans l'eau, à base d'acides carboxyliques monoéthyléniquement insaturés et comportant de 3 à 6 atomes de carbone, caractérisés en ce que les copolymères possèdent une valeur K de 15 à 120 (déterminée selon H. Fikentscher, sur le sel de sodium, en solution aqueuse, à 25° C, à une valeur de pH de 7 et à une concentration polymérique du sel de Na de 1% en poids) et contiennent, incorporés par polymérisation,
   a) 99,5 à 80% molaires d'au moins un acide monocarboxylique en $C_3$ à $C_6$, monoéthyléniquement insaturé et
   b) 0,5 à 20% molaires d'au moins un comonomère présentant au moins deux doubles liaisons éthyléniquement insaturées et non conjuguées, qui comporte au moins un radical -CO-OX dans lequel X représente un équivalent d'hydrogène, de métal alcalin, ou de métal alcalino-terreux, ou un radical ammonium,
   avec la condition que la somme des pourcentages molaires de a) et de b) soit toujours égale à 100.

2. Copolymères solubles dans l'eau selon la revendication 1, caractérisés en ce qu'ils contiennent, incorporés par polymérisation,
   a) au moins 80% molaires d'au moins un acide monocarboxylique en $C_3$ à $C_6$, monoéthyléniquement insaturé,
   b) 0,5 à 20% molaires d'au moins un comonomère présentant au moins deux doubles liaisons éthyléniquement insaturées et non conjuguées, qui comporte au moins un radical -CO-OX dans lequel X représente un équivalent d'hydrogène, de métal alcalin, ou de métal alcalino-terreux, ou un radical ammonium et
   c) 0,5 à 10% molaires d'au moins un comonomère différent de b), qui présente au moins deux doubles liaisons éthyléniquement insaturées et non conjuguées,
   avec la condition que la somme des pourcentages molaires de a), b) et c) soit toujours égale à 100.

3. Procédé de préparation de copolymères solubles dans l'eau selon la revendication 1, caractérisé en ce que l'on copolymérise des mélanges de monomères, constitués de
   a) 99,5 à 80% molaires d'au moins un acide monocarboxylique en $C_3$ à $C_6$, monoéthyléniquement insaturé et
   b) 0,5 à 20% molaires d'au moins un comonomère présentant au moins deux doubles liaisons éthyléniquement insaturées et non conjuguées, qui comporte au moins un radical -CO-OX dans lequel X représente un équivalent d'hydrogène, de métal alcalin, ou de métal alcalino-terreux, ou un radical ammonium,
   en solution aqueuse, en présence d'amorceurs de polymérisation et éventuellement de régulateurs, la somme des pourcentages molaires de a) et de b) étant toujours égale à 100.

4. Procédé de préparation de copolymères solubles dans l'eau selon la revendication 2, caractérisé en ce que l'on copolymérise des mélanges de monomères, constitués de
   a) au moins 80% molaires d'au moins un acide monocarboxylique en $C_3$ à $C_6$, monoéthyléniquement insaturé,
   b) 0,5 à 20% molaires d'au moins un comonomère présentant au moins deux doubles liaisons éthyléniquement insaturées et non conjuguées, qui comporte au moins un radical -CO-OX dans lequel X représente un équivalent d'hydrogène, de métal alcalin, ou de métal alcalino-terreux, ou un radical ammonium et
   c) 0,5 à 10% molaires d'au moins un comonomère différent de b), qui présente au moins deux doubles liaisons éthyléniquement insaturées et non conjuguées,
   en solution aqueuse, en présence d'amorceurs de polymérisation et de régulateurs, la somme des pourcentages molaires de a), b) et c) étant toujours égale à 100.

5. Procédé suivant le revendication 3 ou la revendication 4, caractérisé en ce que l'on prépare d'abord le

comonomère b) par la réaction

b1) d'anhydride maléique, d'anhydride itaconique, d'anhydride citraconique, ou de leurs mélanges, avec

b2) des alcools polyhydroxylés, comportant de 2 à 6 atomes de carbone, des polyalkylèneglycols solubles dans l'eau ou insolubles dans l'eau, d'un poids moléculaire allant jusqu'à environ 400, des polyalkylèneglycols solubles dans l'eau, d'un poids moléculaire supérieur à environ 400 et allant jusqu'à 10.000, des polyglycérines d'un poids moléculaire allant jusqu'à 2.000, des polyamines, des polyalkylènepolyamines, des polyéthylèneimines, des amino-alcools, des acides hydroxy-amino- ou -diaminocarboxyliques, des copolymère solubles dans l'eau de l'oxyde d'éthylène et du dioxyde de carbone ou anhydride carbonique, du poly(alcool vinylique) d'un poids moléculaire allant jusqu'à 10.000, de l'alcool allylique, de l'allylamine, des esters hydroxyalkyliques dont le radical hydroxyalkyle comporte de 2 à 6 atomes de carbone, d'acides carboxyliques en $C_3$ à $C_6$ et monoéthyléniquement insaturés, ou d'acides hydroxycarboxyliques en $C_3$ à $C_6$, saturés, ou des mélanges de ces produits,

à des températures de 50 à 200 ° C et on le copolymérise ensuite avec les monomères a) à des températures allant jusqu'à 200 ° C, en solution aqueuse.

**6.** Procédé suivant au moins l'une des revendications 3 à 4, caractérisé en ce que l'on dissout le comonomère b) dans un acide carboxylique monoéthyléniquement insaturé selon a) ou dans une solution aqueuse de cet acide, éventuellement partiellement ou totalement neutralisée et on le soumet à la copolymérisation sous la forme de cette solution.

**7.** Procédé suivant au moins l'une des revendications 3 à 6, caractérisé en ce que l'on copolymérise des mélanges de monomères, constitués

a) d'acide acrylique et/ou d'acide méthacrylique et

b) d'un comonomère de b1) l'anhydride maléique et b2) l'éthylèneglycol, le polyéthylèneglycol d'un poids moléculaire allant jusqu'à 2.000, la glycérine, des polyglycérines d'un poids moléculaire allant jusqu'à 2.000, la pentaérythrite, des monosaccharides, le néopentylglycol, des $\alpha,\omega$-diamines qui comportent de 2 à 6 atomes de carobne, des $\alpha,\omega$-diols qui comportent de 3 à 6 atomes de carobne, l'hydroxypivalate de mononéopentylglycol et, éventuellement, c) de diacrylates de polyéthylèneglycol, de diméthacrylates de polyéthylèneglycol et d'éther triallylique de la pentaérythrite

**8.** Procédé suivant au moins l'une des revendications 3 à 7, caractérisé en ce que la valeur du pH de la solution aqueuse au cours de la polymérisation varie de 2 à 9.

**9.** Procédé suivant au moins l'une des revendications 3 à 8, caractérisé en ce que l'on copolymérise des mélanges de monomères, constitués

a) d'acide acrylique et/ou d'acide méthacrylique,

b) d'un composé répondant à la formule

$$XOOC-CH=CH-CO-O-\left[CH_2-CH_2-O\right]_n-CO-CH=CH-COOX \qquad (I),$$

dans laquelle

X représente un atome d'hydrogène, un atome de métal alcalin ou un radical ammonium et

n a une valeur qui varie de 1 à 50 et, éventuellement

c) de diacrylates de polyéthylèneglycol, de diméthacrylates de polyéthylèneglycol et d'éther triallylique de la pentaérythrite.

**10.** Procédé suivant au moins l'une des revendications 3 à 8, caractérisé en ce que l'on copolymérise des mélanges de monomères, constitués

a) d'acide acrylique et/ou d'acide méthacrylique,

b) d'un composé de la formule

$$XOOC-CH=CH-CO-NH-CH_2-(CH_2)_n-CH_2-NH-CO-CH=CH-COOX \qquad (II),$$

dans laquelle

X représente un atome d'hydrogène, un atome de métal alcalin ou un radical ammonium et
n a une valeur qui varie de 0 à 4.

**11.** Procédé selon la revendication 9 ou la revendication 10, caractérisé en ce que l'on copolymérise les monomères a) et b) à chaque fois sous forme partiellement neutralisée avec des bases de métaux alcalins ou d'ammonium, le degré de neutralisation atteignant de 10 à 85% molaires.

**12.** Utilisation des copolymères solubles dans l'eau suivant l'une quelconque des revendications 1 et 2 à titre d'agents d'enrobage de graines ou semences.